# EUROPÄISCHE PATENTSCHRIFT

(11) **EP 2 726 333 B1**
(45) Veröffentlichungstag und Bekanntmachung des Hinweises auf die Patenterteilung: **31.01.2018**
(21) Anmeldenummer: 12722373.3
(22) Anmeldetag: 21.05.2012
(51) Int. Cl.: B60S 1/38

(54) **WISCHVORRICHTUNG**
WIPING DEVICE
DISPOSITIF D'ESSUYAGE

(30) Priorität: 28.06.2011 DE 102011078175
(43) Veröffentlichungstag der Anmeldung: 07.05.2014
(73) Patentinhaber: Robert Bosch GmbH, 70442 Stuttgart (DE)
(72) Erfinder: HERINCKX, Dirk, B-3350 Linter (BE); DEPONDT, Helmut, B-3010 Kessel-Lo (BE); BEX, Koen, B-3890 Jeuk (BE)
(86) Internationale Anmeldenummer: PCT/EP2012/059368
(87) Internationale Veröffentlichungsnummer: WO 2013/000627

(56) Entgegenhaltungen:
- EP-A2- 2 177 406
- WO-A1-00/21810
- DE-A1-102005 062 463
- DE-A1-102008 001 045
- DE-A1-102008 041 358
- DE-A1-102009 029 458

## Beschreibung

### Stand der Technik

Es ist bereits eine Wischvorrichtung, insbesondere eine Kraftfahrzeugscheibenwischvorrichtung, mit einem Wischblattadapter bekannt. Die EP 2 177 406 A2 offenbart eine gattungsgemäße Wischvorrichtung.

### Offenbarung der Erfindung

Die Erfindung geht aus von einer Wischvorrichtung, insbesondere von einer Kraftfahrzeugscheibenwischvorrichtung, mit einem Wischblattadapter.

Es wird vorgeschlagen, dass der Wischblattadapter eine Schwenklagerung umfasst, die dazu vorgesehen ist, ein Federelement schwenkbar zu lagern, wodurch das Federelement besonders flexibel ausgestaltet werden kann und eine Anpresskraft an eine zu wischende Oberfläche besonders gleichmäßig verteilt werden kann. Unter einem "Wischblattadapter" soll in diesem Zusammenhang insbesondere ein Adapter verstanden werden, der einen Kontaktbereich zu einem Wischblattbauteil aufweist und mit dem Wischblattbauteil unverlierbar verbunden und dazu vorgesehen ist, einen Kopplungsbereich des Wischblattbauteils für eine Kopplung und/oder Kontaktierung mit einem Wischarmadapter bereitzustellen. Unter einer "Schwenkiagerung" soll in diesem Zusammenhang insbesondere eine Lagerung verstanden werden, die dazu vorgesehen ist, zwei Bauteile miteinander derart zu verbinden, dass eine Schwenkbewegung um eine Schwenkachse möglich ist. Unter einem "Federelement" soll in diesem Zusammenhang insbesondere ein federelastisches Element verstanden werden, das zumindest eine Erstreckung aufweist, die in einem normalen Betriebszustand um zumindest 10 %, insbesondere um wenigstens 20 %, vorzugsweise um mindestens 30 % und besonders vorteilhaft um zumindest 50 % elastisch veränderbar ist, und das insbesondere eine von einer Veränderung der Erstreckung abhängige und vorzugsweise zu der Veränderung proportionale Gegenkraft erzeugt, die der Veränderung entgegenwirkt. Unter "schwenkbar" soll in diesem Zusammenhang insbesondere innerhalb eines Großteils des Wischblattadapters auslenkbar verstanden werden. Unter einem "Großteil" soll in diesem Zusammenhang insbesondere mehr als 50 % verstanden werden. Unter "auslenkbar" soll in diesem Zusammenhang insbesondere zueinander beweglich verstanden werden. Unter "vorgesehen" soll insbesondere speziell ausgelegt und/oder ausgestattet verstanden werden. Nach der Erfindung wird vorgeschlagen, dass die Schwenklagerung zumindest eine punkt- und/oder linienförmige Auflagefläche aufweist, die dazu vorgesehen ist, das Federelement in einem montierten Zustand zu lagern. Unter "punkt- und/oder linienförmig" soll in diesem Zusammenhang insbesondere, zumindest in eine Längsrichtung des Wischblattadapters betrachtet, weniger als 10 %, bevorzugt weniger als 5 %, besonders bevorzugt weniger als 1 % einer Gesamtlängserstreckung des Wischblattadapters verstanden werden. Unter einer "Auflagefläche" soll in diesem Zusammenhang eine Fläche verstanden werden, an welcher ein Federelement in einem montierten Zustand zu einem bestimmten Zeitpunkt am Wischblattadapter anliegt. Unter einer "Längsrichtung" soll in diesem Zusammenhang insbesondere eine Richtung verstanden werden, die sich im Wesentlichen parallel zu einer Längserstreckung des Wischblattadapters erstreckt. Unter einer "Längserstreckung" soll in diesem Zusammenhang insbesondere eine größtmögliche Erstreckung verstanden werden. Unter "im Wesentlichen" soll in diesem Zusammenhang insbesondere eine Abweichung von weniger als 10°, bevorzugt weniger als 5° verstanden werden. Unter einer "Erstreckung" eines Elements soll in diesem Zusammenhang insbesondere ein maximaler Abstand zweier Punkte einer senkrechten Projektion des Elements auf eine Ebene verstanden werden.

Ferner wird vorgeschlagen, dass der Wischblattadapter zumindest einen Freiraum umfasst, der dazu vorgesehen ist, das Federelement zumindest über einen Großteil einer Längserstreckung des Wischblattadapters von diesem in eine Vertikalrichtung zu beabstanden, wodurch eine Auslenkung des Federelements besonders einfach erreicht werden kann. Nach der Erfindung ist die zumindest eine Auflagefläche, in eine Längsrichtung betrachtet, zentral im Wischblattadapter angeordnet. Unter "zentral" soll in diesem Zusammenhang insbesondere ein Bereich verstanden werden, der zwischen 45 % und 55 % der Gesamtlängserstreckung des Wischblattadapters angeordnet ist.

Weist die Schwenklagerung zumindest eine erste und eine zweite punkt- und/oder linienförmige Auflagefläche auf, die dazu vorgesehen ist, das Federelement in einem montierten Zustand zu lagern, kann eine besonders stabile Verbindung zwischen dem Wischblattadapter und dem Federelement erreicht werden.

In einer weiteren Ausgestaltung der Erfindung wird vorgeschlagen, dass die Wischvorrichtung ein Halteelement aufweist, das dazu vorgesehen ist, in einem montierten Zustand das Federelement mit einer Wischleiste und einem Windabweiserelement zu verbinden. Unter einem "Halteelement" soll dabei in diesem Zusammenhang insbesondere ein Element verstanden werden, das dazu vorgesehen ist, ein Windabweiserelement, ein Federelement und eine Wischleiste formschlüssig zu verbinden. Unter einer "Wischleiste" soll in diesem Zusammenhang insbesondere eine Leiste verstanden werden, die dazu vorgesehen ist, eine Fahrzeugscheibe zu wischen. Unter einem "Windabweiserelement" soll in diesem Zusammenhang insbesondere ein Element verstanden werden, das dazu vorgesehen ist, einen auf die Wischvorrichtung wirkenden Fahrtwind abzuweisen und/oder für ein Anpressen einer Wischleiste auf eine Fahrzeugscheibe zu nutzen.

Eine besonders stabile Verbindung zwischen dem Halteelement und dem Wischblattadapter kann erreicht werden, wenn das Halteelement zumindest eine Befestigungsausnehmung aufweist, die dazu vorgesehen ist, den Wischblattadapter in einem montierten Zustand formschlüssig aufzunehmen. Unter einer "Befestigungsausnehmung" soll in diesem Zusammenhang insbesondere eine Ausnehmung verstanden werden, die dazu vorgesehen ist, ein korrespondierendes Befestigungselement aufzunehmen.

### Zeichnungen

Weitere Vorteile ergeben sich aus der folgenden Zeichnungsbeschreibung. In der Zeichnung sind zwei Ausführungsbeispiele der Erfindung dargestellt. Die Zeichnungen, die Beschreibung und die Ansprüche enthalten zahlreiche Merkmale in Kombination.

Es zeigen:
- Fig. 1: eine perspektivische Ansicht einer erfindungsgemäßen Wischvorrichtung mit einem Wischblattadapter und einem Halteelement,
- Fig. 2: eine Schnittdarstellung des Halteelements nach Figur 1,
- Fig. 3: eine Draufsicht des Halteelements nach Figur 1,
- Fig. 4: eine weitere perspektivische Ansicht des Wischblattadapters und des Halteelements nach Figur 1,
- Fig. 5: eine perspektivische Ansicht eines Schnitts durch den Wischblattadapter nach Figur 1 und durch ein Federelement,
- Fig. 6: eine Draufsicht eines Halteelements eines weiteren Ausführungsbeispiels einer erfindungsgemäßen Wischvorrichtung,
- Fig. 7: eine Untersicht des Halteelements nach Figur 6 mit einem Wischblattadapter und
- Fig. 8: eine Schnittdarstellung eines Federelements und des Wischblattadapters nach Figur 7.

### Beschreibung der Ausführungsbeispiele

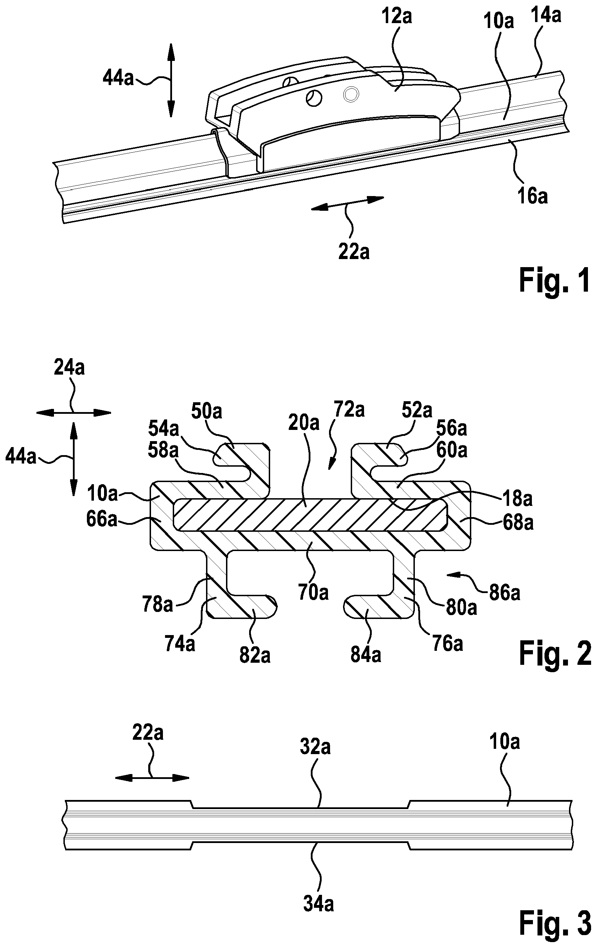

Figur 1 zeigt eine perspektivische Ansicht einer erfindungsgemäßen Wischvorrichtung mit einem Halteelement 10a, einem Wischblattadapter 12a, einem Windabweiserelement 14a und einer Wischleiste 16a in einem montierten Zustand. Der Wischblattadapter 12a, das Windabweiserelement 14a und die Wischleiste 16a sind am Halteelement 10a befestigt. Der Wischblattadapter 12a ist dazu vorgesehen, mit einem Wischerarm (nicht dargestellt) gekoppelt zu werden. Über das Halteelement 10a wird die Wischleiste 16a in einem Betriebszustand, d.h. wenn der Wischerarm eine Wischbewegung ausführt, über eine zu wischende Oberfläche (nicht dargestellt) bewegt. Bei einem Auftreffen von Fahrtwind weist das Windabweiserelement 14a diesen ab und presst die Wischvorrichtung auf die zu wischende Oberfläche.

Figur 2 zeigt das Halteelement 10a, das einen Längsführungskanal 18a zur Führung eines Federelements 20a aufweist, in einer Schnittdarstellung. Die Schnittebene verläuft senkrecht zu einer Längsrichtung 22a des Halteelements 10a. Das Halteelement 10a weist zwei Windabweiserbefestigungselemente 50a, 52a auf. Die Windabweiserbefestigungselemente 50a, 52a sind einstückig mit dem Halteelement 10a ausgebildet. Die Windabweiserbefestigungselemente 50a, 52a weisen an ihren freien Enden 54a, 56a in voneinander abgewandte Richtungen. Ferner bilden die Windabweiserbefestigungselemente 50a, 52a zwei Kanalwandungen 58a, 60a, die an den Längsführungskanal 18a an einer wischleistenabgewandten Seite angrenzen. Die Windabweiserbefestigungselemente 50a, 52a sind im Bereich ihrer freien Enden 54a, 56a widerhakenförmig ausgebildet. Die Enden 54a, 56a sind in einem montierten Zustand von einem Windabweiserelement 14a umschlossen.

Zur Führung des Federelements 20a grenzen Seitenwandungen 66a, 68a des Längsführungskanals 18c an die Kanalwandungen 58a, 60a. Die Kanalwandungen 58a, 60a schließen dabei einen rechten Winkel mit den Seitenwandungen 66a, 68a ein. An die Seitenwandungen 66a, 68a ist ferner eine Zwischenwandung 70a angeordnet, die den Längsführungskanal 18a in Richtung der Wischleiste 16a abschließt. Die Seitenwandungen 66a, 68a erstrecken sich von der Zwischenwandung 70a aus in eine von der Wischleiste 16a abgewandte Richtung. Das Halteelement 10a weist eine Längsöffnung 72a auf, die den Längsführungskanal 16a zum Windabweiserelement 14a hin öffnet.

An der Zwischenwandung 70a sind zwei L-förmige Führungsprofile 74a, 76a des Halteelements 10a angeordnet. Die Führungsprofile 74a, 76a sind einstückig mit dem Halteelement 10a ausgebildet. Die Führungsprofile 74a, 76a weisen jeweils eine Seitenführung 78a, 80a und jeweils eine Vertikalführung 82a, 84a auf. Die Vertikalführungen 82a, 84a schließen mit den Seitenführungen 78a, 80a jeweils einen Winkel von 90° ein. Die Seitenführungen 78a, 80a schließen jeweils einen Winkel von 90° zur Zwischenwandung 70a ein. Die Führungsprofile 74a, 76a weisen an ihren freien Enden der Vertikalführungen 82a, 84a in einander zugewandte Richtungen. Die Führungsprofile 74a, 76a und die Zwischenwandung 70a bilden eine Kederschiene 86a, in welche die Wischleiste 16a in einem montierten Zustand eingeführt ist.

Das Halteelement 10a ist in einem Extrusionsverfahren einstückig aus Polyethylen hergestellt. Ein Fachmann wird in diesem Zusammenhang verschiedene, als sinnvoll erscheinende Kunststoffe in Erwägung ziehen, wie insbesondere Polypropylen, Polyamid, Polyvinylchlorid, Polycarbonat und/oder Polystyrol.

Figur 3 zeigt eine Draufsicht auf das Halteelement 10a. Das Halteelement 10a weist zwei Befestigungsausnehmungen 32a, 34a auf, die dazu vorgesehen sind, den Wischblattadapter 12a formschlüssig aufzunehmen. Die Befestigungsausnehmungen 32a, 34a sind in Seitenwandungen 66a, 68a, die den Längsführungskanal 18a seitlich begrenzen, angeordnet.

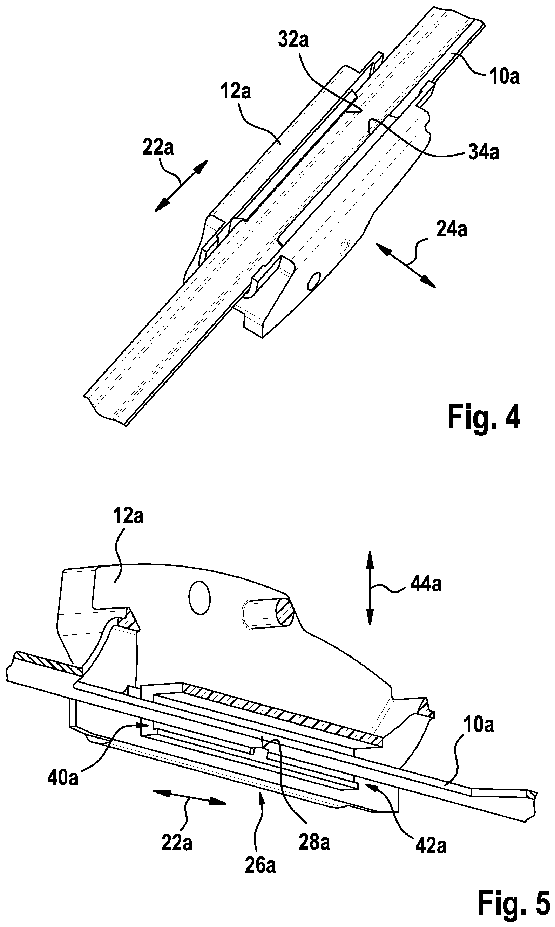

Bei einer Montage wird zunächst der Wischblattadapter 12a in einer Vertikalrichtung 44a auf das Halteelement 10a aufgesetzt (Figur 4). Die Vertikalrichtung 44a erstreckt sich senkrecht zur Längsrichtung 22a und senkrecht zu einer Wischrichtung 24a. Somit steht die Vertikalrichtung 44a in einem Betriebszustand senkrecht zu einer zu wischenden Oberfläche (nicht dargestellt).

Der Wischblattadapter 12a umfasst eine Schwenklagerung 26a, die das Federelement 20a schwenkbar lagert (Figur 5). Die Schwenklagerung 26a weist eine punktförmige Auflagefläche 28a auf, die das Federelement 20a in einem montierten Zustand lagert. Der Wischblattadapter 12a umfasst ferner einen Freiraum 40a, 42a, der das Federelement 20a über einen Großteil einer Längserstreckung des Wischblattadapters 12a von diesem in Vertikalrichtung 44a beabstandet. Die Auflagefläche 28a ist, in Längsrichtung 22a betrachtet, zentral im Wischblattadapter 12a angeordnet. Eine weitere identische Schwenklagerung ist zur Schwenklagerung 26a symmetrisch zur Schnittebene angeordnet, jedoch aus Gründen der Übersichtlichkeit nicht dargestellt.

Die Befestigungsausnehmungen 32a, 34a erstrecken sich in einem montierten Zustand im Bereich des Freiraums 40a, 42a und der Schwenklagerung 26a.

Dadurch lässt sich das Halteelement 10a innerhalb des Wischblattadapters 12a in Vertikalrichtung 44a auslenken. Eine Bewegung des Wischblattadapters 12a relativ zum Halteelement 10a in Längsrichtung 22a und in Wischrichtung 24a ist jedoch vermieden.

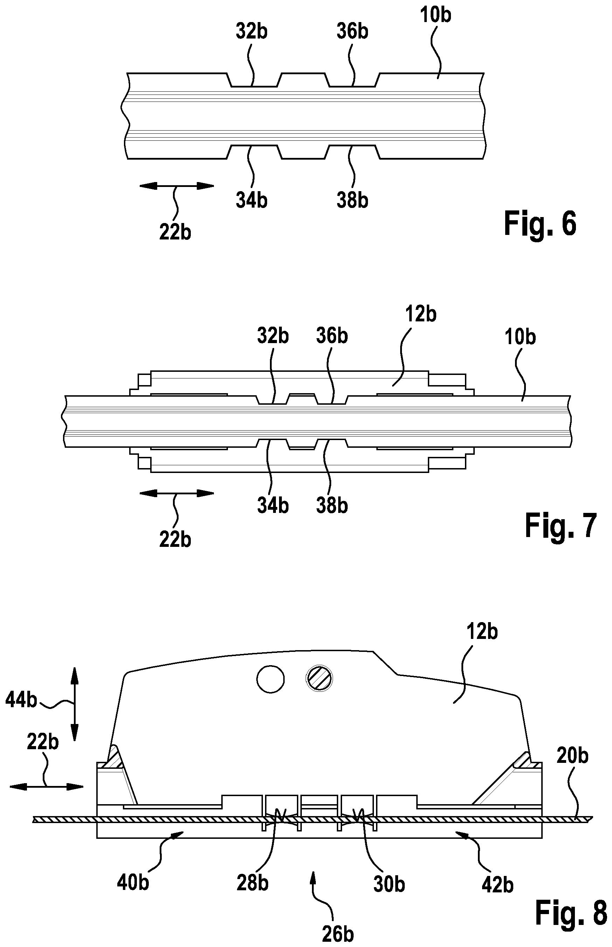

In den Figuren 6 bis 8 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des ersten Ausführungsbeispiels verwiesen werden kann. Zur Unterscheidung der Ausführungsbeispiele ist der Buchstabe a in den Bezugszeichen des Ausführungsbeispiels in den Figuren 1 bis 5 durch den Buchstaben b in den Bezugszeichen des Ausführungsbeispiels der Figuren 6 bis 8 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des ersten Ausführungsbeispiels verwiesen werden.

In Figur 6 ist ein Halteelement 10b eines weiteren Ausführungsbeispiels einer Wischvorrichtung dargestellt. Ein Aufbau des Halteelements 10b entspricht im Querschnitt dem in Figur 2 gezeigten Halteelement 10a. Das Halteelement 10b weist vier Befestigungsausnehmungen 32b, 34b, 36b, 38b auf, die in Seitenwandungen 66b, 68b angeordnet sind. In jeder Seitenwandung 66b, 68b sind dabei jeweils zwei der Befestigungsausnehmungen 32b, 36b bzw. 34b, 38b angeordnet. Die Befestigungsausnehmungen 32b, 34b, 36b, 38b weisen eine trapezförmige Kontur auf.

In Figur 7 ist ein erster Montageschritt der Wischvorrichtung gezeigt. Ein Wischblattadapter 12b ist aus das Halteelement 10b aufgesetzt und greift formschlüssig in die Befestigungsausnehmungen 32b, 34b, 36b, 38b ein. Eine Bewegung des Wischblattadapters 12b relativ zum Halteelement 10b in Längsrichtung 22b und in Wischrichtung 24b ist vermieden. Anschließend wird ein Federelement 20b in das Halteelement 10b eingeschoben. Der Wischblattadapter 12b umfasst eine Schwenklagerung 26b. Das Federelement 20b ist dabei von einer ersten und einer zweiten linienförmigen Auflagefläche 28b, 30b der Schwenklagerung 26b des Wischblattadapters 12b gelagert (Figur 8). In Figur 8 ist aus Gründen der Übersichtlichkeit das Halteelement 10b nicht dargestellt. Der Wischblattadapter 12b umfasst einen Freiraum 40b, 42b, der das Federelement 20b über einen Großteil einer Längserstreckung des Wischblattadapters 12b von diesem in Vertikalrichtung 44b beabstandet. Das Federelement 20b ist dadurch innerhalb des Wischblattadapters 12b in Vertikalrichtung 44b auslenkbar. Eine weitere, identische Schwenklagerung ist zur Schwenklagerung 26b symmetrisch zur Schnittebene angeordnet, jedoch aus Gründen der Übersichtlichkeit nicht dargestellt.

## Patentansprüche

1. Wischvorrichtung, insbesondere
Kraftfahrzeugscheibenwischvorrichtung, mit einem Wischblattadapter (12a; 12b), wobei der Wischblattadapter (12a; 12b) eine Schwenklagerung (26a; 26b) umfasst, die dazu vorgesehen ist, ein Federelement (20a; 20b) schwenkbar zu lagern und die zumindest eine punkt- und/oder linienförmige Auflagefläche (28a, 28b) aufweist, an welcher das Federelement (20a; 20b) in einem montierten Zustand zu einem bestimmten Zeitpunkt am Wischblattadapter (12a; 12b) anliegt und die dazu vorgesehen ist, das Federelement (20a, 20b) in einem montierten Zustand zu lagern, **dadurch gekennzeichnet, dass** die zumindest eine Auflagefläche (28a), in eine Längsrichtung (22a) betrachtet, zentral im Wischblattadapter (12a) angeordnet ist.

2. Wischvorrichtung nach Anspruch 1, **dadurch gekennzeichnet, dass** der Wischblattadapter (12a; 12b) zumindest einen Freiraum (40a; 40b, 42a; 42b) umfasst, der dazu vorgesehen ist, das Federelement (20a; 20b) zumindest über einen Großteil einer Längserstreckung des Wischblattadapters (12a; 12b) von diesem in eine Vertikalrichtung (44a; 44b) zu beabstanden.

3. Wischvorrichtung nach Anspruch 1 oder 2, **dadurch gekennzeichnet, dass** die Schwenklagerung (26b) zumindest eine erste und eine zweite punkt- und/oder linienförmige Auflagefläche (28b, 30b) aufweist, die dazu vorgesehen ist, das Federelement (20b) in einem montierten Zustand zu lagern.

4. Wischvorrichtung nach einem der vorhergehenden Ansprüche, **gekennzeichnet durch** ein Halteelement (10a; 10b), das dazu vorgesehen ist, in einem montierten Zustand das Federelement (20a; 20b) mit einer Wischleiste (16a) und einem Windabweiserelement (14a) zu verbinden.

5. Wischvorrichtung nach Anspruch 4, **dadurch gekennzeichnet, dass** das Halteelement (10a; 10b) zumindest eine Befestigungsausnehmung (32a; 32b, 34a; 34b,36b, 38b) aufweist, die dazu vorgesehen ist, den Wischblattadapter (12a; 12b) in einem montierten Zustand formschlüssig aufzunehmen.

6. Wischblattadapter (12a; 12b) einer Wischvorrichtung nach einem der vorhergehenden Ansprüche.

7. Wischblatt mit einer Wischvorrichtung nach einem der Ansprüche 1 bis 5, sowie mit einem Federelement (20a; 20b), einem Windabweiserelement (14a), einem Halteelement (10a; 10b) und einer Wischleiste (16a).

## Claims

1. Wiper device, particularly motor vehicle windscreen wiper device, having a wiper blade adapter (12a; 12b), wherein the wiper blade adapter (12a; 12b) comprises a pivot bearing (26a; 26b) which is provided to pivotably support a spring element (20a; 20b) and which has at least one punctiform and/or linear bearing surface (28a, 28b), on which the spring element (20a; 20b) rests in a mounted state at a particular point in time on the wiper blade adapter (12a; 12b) and which is provided to support the spring element (20a, 20b) in a mounted state, **characterized in that** the at least one bearing surface (28a) is arranged centrally in the wiper blade adapter (12a), viewed in a longitudinal direction (22a).

2. Wiper device according to Claim 1, **characterized in that** the wiper blade adapter (12a; 12b) comprises at least one free space (40a; 40b, 42a; 42b) which is provided to space the spring element (20a; 20b) at least over a large part of a longitudinal extension of the wiper blade adapter (12a; 12b) from said wiper blade adapter in a vertical direction (44a; 44b).

3. Wiper device according to Claim 1 or 2, **characterized in that** the pivot bearing (26b) exhibits at least a first and a second punctiform and/or linear bearing surface (28b, 30b), which is provided to support the spring element (20b) in a mounted state.

4. Wiper device according to one of the preceding claims, **characterized by** a retaining element (10a; 10b) which is provided to connect the spring element (20a; 20b) to a wiper strip (16a) and to a wind deflector element (14a) in a mounted state.

5. Wiper device according to Claim 4, **characterized in that** the retaining element (10a; 10b) has at least one fastening recess (32a; 32b, 34a; 34b, 36b, 38b) which is provided to receive the wiper blade adapter (12a; 12b) in an interlocking manner in a mounted state.

6. Wiper blade adapter (12a; 12b) of a wiper device according to one of the preceding claims.

7. Wiper blade with a wiper device according to one of Claims 1 to 5, and also with a spring element (20a; 20b), a wind deflector element (14a), a retaining element (10a; 10b), and a wiper strip (16a).

## Revendications

1. Dispositif d'essuie-glace, en particulier dispositif d'essuie-glace de véhicule automobile, comprenant un adaptateur de balai d'essuie-glace (12a ; 12b), l'adaptateur de balai d'essuie-glace (12a ; 12b) comprenant un support sur palier pivotant (26a ; 26b) qui est prévu pour supporter de manière pivotante un élément de ressort (20a ; 20b) et qui présente au moins une surface d'appui ponctuelle et/ou linéaire (28a, 28b) au niveau de laquelle l'élément de ressort (20a ; 20b) s'appuie dans un état monté à un instant déterminé contre l'adaptateur de balai d'essuie-glace (12a ; 12b), et qui est prévu pour supporter l'élément de ressort (20a, 20b) dans un état monté, **caractérisé en ce que** l'au moins une surface d'appui (28a), vue dans une direction longitudinale (22a), est disposée centralement dans l'adaptateur de balai d'essuie-glace (12a).

2. Dispositif d'essuie-glace selon la revendication 1, **caractérisé en ce que** l'adaptateur de balai d'essuie-glace (12a ; 12b) comprend au moins un espace libre (40a ; 40b, 42a ; 42b) qui est prévu pour espacer l'élément de ressort (20a ; 20b) de l'adaptateur de balai d'essuie-glace (12a ; 12b), au moins sur une majeure partie d'une étendue longitudinale de ce dernier, dans une direction verticale (44a ; 44b).

3. Dispositif d'essuie-glace selon la revendication 1 ou 2, **caractérisé en ce que** le support sur palier pivotant (26b) présente au moins une première et une deuxième surface d'appui ponctuelle et/ou linéaire (28b, 30b) qui est prévue pour supporter l'élément de ressort (20b) dans un état monté.

4. Dispositif d'essuie-glace selon l'une quelconque des revendications précédentes, **caractérisé par** un élément de retenue (10a ; 10b), qui, dans un état monté, est prévu pour relier l'élément de ressort (20a ; 20b) à une raclette de balai d'essuie-glace (16a) et à un élément déflecteur de vent (14a).

5. Dispositif d'essuie-glace selon la revendication 4, **caractérisé en ce que** l'élément de retenue (10a ; 10b) présente au moins un évidement de fixation (32a ; 32b, 34a ; 34b, 36b, 38b) qui est prévu pour recevoir l'adaptateur de balai d'essuie-glace (12a ; 12b) par engagement par correspondance de formes dans un état monté.

6. Adaptateur de balai d'essuie-glace (12a ; 12b) d'un dispositif d'essuie-glace selon l'une quelconque des revendications précédentes.

7. Balai d'essuie-glace, comprenant un dispositif d'essuie-glace selon l'une quelconque des revendications 1 à 5 ainsi qu'un élément de ressort (20a ; 20b), un élément déflecteur de vent (14a), un élément de retenue (10a ; 10b) et une raclette de balai d'essuie-glace (16a).
